# EUROPEAN PATENT APPLICATION

(11) **EP 4 596 122 A1**
(43) Date of publication of application: **06.08.2025**
(21) Application number: 24155201.7
(22) Date of filing: 01.02.2024
(51) Int. Cl.: B08B 3/02, B08B 3/04, B08B 11/02, G02C 13/00

(54) **MACHINE AND METHOD FOR CLEANING LENSES, LIKE EYEGLASS LENSES**

(71) Applicant: Mei S.R.L., 24036 Ponte San Pietro (BG) (IT)
(72) Inventor: SONZOGNI, Stefano, 24036 Ponte San Pietro (IT)
(74) Representative: Kiwit, Benedikt

(57) **Abstract**

A machine (1) for cleaning lenses, like eyeglass lenses comprising a handling unit (2) for carrying and transferring a lens (L) to be cleaned along a processing path (P), and at least one processing unit (3, 4, 5) having a cleaning chamber (30, 40, 50). The at least one processing unit (3, 4, 5) is arranged such that it can be moved along a movement path (M) between (i) a retracted position in which the lens (L) carried by the handling unit (2) is able to be transferred by the handling unit (2) along the complete processing path (P) outside and relative to the at least one processing unit (3, 4, 5), and (ii) a receiving position in which the lens (L) carried by the handling unit (2) at the processing position (W) is received in the cleaning chamber (30, 40, 50) to allow the lens (L) be processed.

## Description

The present invention is directed to a machine for cleaning lenses, like eyeglass lenses or any other type of optical lenses, as well as a method for cleaning such lenses.

Manufacturing of optical lenses, such as but not limited to eyeglass lenses, is usually done in several steps in optical labs. During the manufacturing process, the lenses can accumulate dust, particles, or residue that can affect the optical properties. Cleaning helps to remove these contaminants, ensuring the lens being pristine before proceeding to subsequent manufacturing steps. Different cleaning methods, such as ultrasonic cleaning, solvent cleaning, brush cleaning and rinsing with specialized solutions, are known.

There is also a need to inspect the lenses to assess the quality of the optical surface, the clarity and transparency of the material, and the precision of the optical parameters. There exist various technics, including visual inspection, automated optical inspection, or specialized equipment like interferometers, to examine the lenses for defects, irregularities or imperfections that could affect there functionality. Such inspection is done at different stages of manufacturing to preferably identify any affecting issues as early as possible to maintain required quality standards.

For cleaning lenses from dust or residues coming from one of the various manufacturing steps, the existing technology provides machines designed as long tunnels, in which multiple cleaning stations are aligned along a main conveyor system. The dirty lenses are usually transported to the cleaning machine by a transportation means, and are then manipulated by automatic arms or manually to be loaded into the main conveyor system. In each cleaning station, a usually different cleaning process is performed, using chemical, mechanical, thermal, ultrasonic, and/or other techniques. The cleaning process is completed when the lens exits the machine at their downstream end, where the clean lens is then placed back into the transportation means.

The movement of the main conveyor moving slowly through the different cleaning stations determines the output capability of the entire unit. Usually, the lenses have two opposite surfaces to be cleaned at the same time. For this reason, the main conveyor may only touch minimal supporting area of the lens to leave both surfaces as exposed as possible.

After leaving the cleaning machine, the lenses are transferred, e.g. in the transportation means, to another process stage. For instance, the lens may be transferred to a separate inspection station in which the lens is inspected to assess the quality of the optical surface, the clarity and transparency of the material, and the precision of the optical parameters. The inspection is done by automatic machineries or by an operator with the help of a specifically designed lighting system that emphasize the defects and help in distinguishing dust and other mobile objects from a real scratch or material inclusion.

Common main conveyors having a very basic and minimal holding system can only securely handle uncut lenses with large ratio between diameter, curvature of the optical surfaces and thickness. This restricts the field of such systems to initial manufacturing steps before machining or at least edging of the lens. In particular, once the machining of the lens' surfaces is completed, the last machining step is edging to conform the lens to the spectacle frame in which the lens must be placed. Particularly, in the case of eyeglass lenses, the shape of edged lenses varies a lot according to customer needs and fashion trends. Attempts to use transportation technologies of uncut lenses also for edged lenses has proven to be problematic due to the high rate of lost lenses during the transit of the lens through the various cleaning stages.

Moreover, known main conveyor transportation systems move slowly through the different washing stations, which results in transferring any cleaning liquids from one process station to the next one thus creating contamination that requires special purification plants to maintain the consistency of the chemical composition of the liquids that are used in the different stages. Moreover, the openings present in any cell through which the conveyor system passes can hardly be sufficiently sealed due to the required lateral passage of the lenses and the lens carrying system. This results in even more contamination from one cell to the next one. This problem is solved in existing systems by providing wide distances between the neighboring stations, with result in comparably long machines which are expensive as well as space and energy consuming. There also exist main conveyor systems, which transfer the lenses horizontally and enter them successively by vertical movement into the neighbouring cells. This demands for a quite complex, expensive and inflexible main conveyor system.

The final quality inspection is usually done in a separate machine and location, which requires a cumbersome transfer of the lens from one conveyor to another; often using the mentioned transportation means. This requires additional handling of the lens, which requires even more handling systems thus increasing costs and the risk of losing lenses during handling. Also, the multiple manipulation of the lenses, either manual or automatic, often contaminates the lenses thus making the inspection process difficult to identify real defects and avoid considering dirt accumulated on the lenses. Particularly in case of manual inspection, an operator trying to remove dust from the lens, e.g. with air guns, cloth or other mechanical means, may even scratch the lenses during the quality inspection, thus resulting in increased numbers of deficient products.

It is thus an object of the present invention to provide a machine and method, which allow for efficient and secure as well as easy cleaning of lenses, like eyeglass lenses or any other type of optical lenses, preferably irrespective of their shape. Preferably, inspection of the machined (e.g. edged) and cleaned lens shall be facilitated and improved.

These objects are achieved by the subject-matter of the independent claims. The dependent claims study further the central ideal of the present invention.

According to a first aspect, the present invention is directed to a machine for cleaning lenses, like eyeglass lenses or any other type of optical lenses. The machine comprises a handling unit for carrying and transferring a lens to be cleaned along a processing path. The machine further comprises at least one processing unit having a processing chamber for processing the lens carried by the handling unit at a processing position along the processing path. The at least one processing unit comprises a (or at least one) cleaning unit having a cleaning chamber as the processing chamber for cleaning the lens carried by the handling unit. The at least one processing unit is arranged such that it can be moved along a movement path between a retracted position, in which the lens carried by the handling unit is able to be transferred by the handling unit along the complete processing path outside and relative to the at least one processing unit, and a receiving position, in which the lens carried by the handling unit at the processing position is received in the processing chamber to allow the lens be processed (e.g. cleaned).

The machine according to the present invention is designed such that it is the processing unit, which makes (at least part of) the movement to relatively transfer the lens into and out of the processing chamber. Hence, the handling unit can be simplified. Also, this arrangement allows for easier separating the processing units and the processing chambers from each other to thus reduce potential risk of cross-contamination. The integration of the handling unit and the movable processing unit(s) ensures that the cleaning process can be directly aligned with the transportation and preferably also potential loading mechanisms. This alignment guarantees a precise movement and positioning of the lens during processing (incl. cleaning), thus reducing the margin for error and ensuring thorough and consistent cleaning results. Hence, efficient and easy as well as secure cleaning can be obtained.

The handling unit may comprise a conveyor adapted to move in a conveying direction along the processing path. Hence, a common type of handling unit can be used having a defined conveying direction for a precise lens transfer and handling.

The conveyor may be a circular conveyor having a closed loop processing path. Such a conveyor allows for a compact layout of the machine, while preferably using common means for its realization.

The handling unit may comprise at least one carrying device for gripping (e.g. clamping) the lens, preferably at its (outer) circumferential rim, such that the lens is carried while being transferred along the processing path and processed in the processing chamber. Such carrying devices for gripping lenses are structurally simple but highly efficient in handling lenses. Hence, the handling unit can be simplified while allowing for precise handling of the lens throughout the whole process.

The carrying device may be connected to the conveyor to move along the processing path. Hence, the carrying device can be easily provided and travelled along to allow effective transfer of the lens, while the machine has a low complex functional layout.

The carrying device, at the processing position, protrudes towards the related processing unit; and preferably protrudes vertically downward towards the related processing unit. Hence, the handling unit can easily transfer the lens to the processing position at which then the processing unit can be easily and simply moved along their movement path to receive the lens therein. This facilitates the process and allows for a simplified machine layout and functionality. If protruding vertically downward, cleanliness of the whole process can be improved, as the lens faces downwards towards the processing unit or processing chamber to thus effectively receive even any dripping cleaning liquids. The lens, at the processing position, is effectively positioned above the respective processing unit or in the processing chamber, thus effectively reducing cross-contamination with other processing units. The processing unit or processing chamber can then easily moved up and down to receive the lens, thus allowing for simple travel motions.

The carrying device may be arrange to be moveable, at least at the processing position, to approach the related processing unit to enter the lens carried by the carrying device in the related processing chamber of the processing unit in the receiving position. Hence, the carrying device may allow for a motion towards the processing chamber, which in turn is moved along the movement path, so that the respective movements can be minimized, while the overall combined movement remains effective to easily receive the lens in the processing chamber. Hence, the handling unit may support the processing unit in its move ability function as needed.

The receiving position is preferably closer to the handling unit and more prefer the related processing position, than the retracted position. Hence, handling and transferring of the lens can be easily obtained in the retracted position to bring the lens to the required processing position, while approaching the processing unit when moving it to the receiving position allows for an easy receipt of the lens in the processing chamber for processing the lens; i.e. at least cleaning the lens. Also, the handling unit can be made compact.

The movement path preferably is a translational movement path. Hence, the machine can be designed in a simple way as only requiring to obtain a single and straight translational movement. A respective actuator can thus be provided in a simple way.

The movement path may extend substantially vertically. This allows for the processing unit be always arranged vertically above or alternatively - and preferably - below the lens in the retracted position, thus reducing risk of cross-contamination. Also, the machine layout can be made compact.

The (at least one) cleaning unit may comprise a(t least one) washing unit to wash the lens (preferably at a washing position as the related processing position). Hence, effective cleaning of the lens can be obtained. The washing unit comprises a washing chamber as the cleaning chamber.

The washing unit may comprise a cleaning element for chemically and/or mechanically washing the lens in the cleaning or washing chamber. Hence, the machine may use effective cleaning means for easily and effectively cleaning the lens.

The cleaning element may comprise a brushing device for mechanically washing the lens in the cleaning (i.e. washing) chamber. Hence, a highly effective brushing device can be provided.

The brushing device may comprise a brush being arranged rotatably around a rotation axis to clean a lens surface (i.e. of the lens) positioned at a cleaning area in the cleaning/washing chamber. A brush allows for a highly effective cleaning of the lens.

The rotation axis may preferably be tiltable about a tilting axis to change the orientation of the brush relative to the cleaning area. Hence, cleaning with the brush can be made even more efficient. The tilting axis may preferably be oriented orthogonally to the rotation axis, so that the relative movement of the brush can be simplified, and cleaning can be made effective even during the relative movement (i.e. tilting) of the brush during cleaning. Hence, even areas which may be difficult to be reached for the brush (e.g. areas close to contact areas of a holding unit or carrying device to carry/hold/grip/clamp the lens during cleaning) can be effectively cleaned.

The machine may comprise a plurality of the processing units, each being movable between the related rejected position and the related processing position. Hence, the machine can be provided with processing units, as needed, to allow for a likewise efficient and effective processing of the lens.

The plurality of processing units may preferably be arranged in a row, and more preferred side-by-side in a row. Hence, the machine can be provided in a compact manner, while allowing for an efficient processing of the lenses.

The plurality of processing units may comprise a plurality of the cleaning units, thus improving the cleaning quality, as needed.

The plurality of cleaning units may preferably comprise the washing unit or a plurality of the washing units, as described herein above. Hence, said washing can be improved, as needed.

Additionally or alternatively, the plurality of cleaning units may (further) comprise at least one rinsing unit to rinse the (preferably washed) lens (preferably at a rinsing position as the related processing position). Hence, the lens can be effectively removed from any residues; even from cleaning liquids of the washing process, thus increasing purification of the cleaned lens.

The rinsing unit may preferably comprise a rising element, like a liquid nozzle, to apply a liquid (e.g. a liquid jet) onto the lens. Hence, rising can be obtained in an easy and effective manner.

The plurality of cleaning units may, alternatively or additionally, preferably (further) comprise at least one drying or blowing unit to dry or blow the (e.g. washed and preferably also rinsed) lens (preferably at a drying or blowing position as the related processing position). Hence, any liquid residues and/or hard particles (like dust) can be removed, thus avoiding potential cross-contamination and increasing purification and cleanliness of the cleaned lens.

The drying or blowing unit may preferably comprise a drying or blowing element, like a (drying or blowing) nozzle, to apply a fluid (e.g. a fluid jet; preferably a gaseous fluid or air (jet)) onto the lens. Hence, a simple and effective means for drying and/or blowing the lens can be provided, thus increasing cleanliness of the cleaned lens.

The plurality of the processing units may further comprise at least one inspection unit for inspecting the cleaned lens at an inspection position as the related processing position. Hence, even an inspection step can be integrated in the compact and effective arrangement of moveable processing units. Alternatively or additionally, the machine may further comprise at least one or a plurality of additional processing units which comprise at least one inspection unit for inspecting the cleaned lens at an inspection position along the processing path; preferably downstream of the cleaning unit(s). Hence, inspection can be provided but separate from the moveable processing units, thus arranging the inspection functionality within the machine as desired - preferably allowing for the machine be laid out more compact - and preferably also allowing for a highly accurate inspection at a desired location.

By integrating transportation, cleaning, and inspection functionalities into a single machine, handling and transition between different processing stages can be facilitated and the efforts to realize it be minimized. This reduces the time required for maintenance and allows for a quicker output in cleaning lenses. Combining cleaning and inspection within the same machine allows for a real-time assessment of the lens condition; preferably with minimized risk of contamination of the lens due to the close proximity of cleaning and inspection. This immediate feedback loop ensures that any residues or imperfections can be promptly identified and addressed, thus maintaining high-quality standards. Moreover, having a single machine for these functions saves space, simplifies maintenance logistics and potentially reduces the need for additional equipment or resources, thus making the system more cost-effective. Moreover, integration into a single machine simplifies the operational interface, making it user-friendly and accessible for technicians or operators. The streamlined workflow reduces the need for extensive training, and allows for easier adoption of the technology.

The at least one inspection unit may comprise at least one optical inspection unit for optically inspecting the lens and/or at least one cosmetic inspection unit for cosmetically inspecting the lens. Hence, inspection functionalities can be provided, as required, thus preferably allowing to obtain any desired quality standard.

The processing unit may be arranged to be moved individually from each other between their related retracted position and receiving position. This would allow the corresponding steps be individually controlled to thus allow for an efficient process.

At least some or all of the processing units may also be arranged to be jointly moved between the retracted position and the receiving position. Hence, this movement and corresponding actuators can be simplified, thus making the process more efficient and cost-saving, and the machine more compact and simplified.

The at least one or the plurality of the processing units are all arranged below the handling unit or below the processing path or at least below the related processing position(s). Hence, handling and processing can be effectively positioned one above the other, thus making the whole machine compact, easily accessible for maintenance and reducing the risk of cross-contamination.

The machine may further comprise a loading unit for loading the lens to be cleaned to the handling unit, preferable to the conveyor or the carrying device if present. The loading unit is preferably positioned along the processing path upstream of the at least one processing unit. Hence, loading of a lens to the machine can be facilitated and preferably easily automized.

Likewise, the machine may comprise an unloading unit for unloading the cleaned lens from the handling unit, preferably from the conveyor or the carrying device if present. The unloading unit may be positioned along the processing path downstream of the at least one processing unit, and preferably also downstream of the additional processing unit(s) if present. Hence, unloading of the lens can be facilitated and preferably automized.

The loading unit and the unloading unit may preferably be provided in the same charging unit. Hence, the machine can be made compact while preferably the number of parts can be reduced, thus reducing the costs of the machine.

The loading unit and/or the unloading unit preferably respectively comprise a handling device for transferring the lens between a respective charging position (e.g., at which the lenses are transferred / supplied to the machine) and the handling unit, preferably the conveyor or the carrying device if present. Hence, the loading and unloading of the lenses to/from the handling unit can be facilitated.

The machine may further comprise a positioning unit for orienting the lens to be cleaned (e.g. to a defined /optimized processing orientation) before being received by the handling unit. Hence, the orientation of the lens can be optimized with respect to the handling unit, thus improving a secure and tight holding functionality and reducing the risk of losing lenses during their handling.

The positioning unit may preferably comprise a or the handling device adapted to orient the lens, a scanning unit to define the actual orientation of the lens, and a control unit to compare the actual orientation of the lens with a defined processing orientation of the lens and to control the handling device to transfer the lens to the handling unit such that the handling unit can receive the lens be oriented in the processing orientation. Hence, the lens can be highly effectively and precisely transferred to the handling unit, where it can be received in a desired and preferably optimized orientation to allow for a secure transfer of the lens through the machine.

The machine may further comprise a cleaning fluid (e.g. liquid) circulation system having a storage to carry the cleaning Fluid (e.g. liquid), a circulation path to carry the cleaning fluid (e.g. liquid) into the respective cleaning chamber for cleaning the lens, and preferably also a recirculation path to recirculate the used cleaning fluid (e.g. liquid) from the respective cleaning chamber. Hence, a cleaning liquid, like a detergent or water, or other cleaning fluid or liquid can be easily provided to the respective processing unit or processing chamber. There can be provided different storage means, e.g. tanks to store the respective cleaning fluid (e.g. liquid). The cleaning fluid (e.g. liquid) can be circulated by use of common pumps, like a peristaltic pump or a centrifugal pump. Potential cleaning fluids or liquids can be, as mentioned, detergents, water or any other fluid or liquid means. The circulation path and/or the recirculation path may comprise a filter means to remove any undesired contamination, like debris. The filtration means may comprise coarse filtration means and/or fine filtration means, as desired. The machine may further comprise a heating means to heat the cleaning fluid/liquid, as desired.

The machine may further comprise a main frame carrying the handling unit and the at least one processing unit. Hence, the layout of the machine can be simplified, and the respective units can be easily supported and relatively arranged to each other, thus allowing for an easy and stable assembly and use.

The machine may be a standalone machine, thus allowing for an easy shipping and installation of the machine, e.g. at a factory, as desired.

According to another aspect, the present invention is directed to a method for cleaning lenses, like eyeglass lenses or any other type of optical lenses, comprising the following steps preferably in the given order.

In a first step, a machine according to the invention as described herein above is provided.

In a second step, a lens is received by the handling unit to carry the lens.

In a third step, the lens is transferred by the handling unit along the processing path and to the processing position.

In a forth step, the cleaning unit is moved from the retracted position to the receiving position to receive the lens at the processing position in the cleaning chamber.

In a fifth step, the lens is cleaned in the cleaning chamber.

In a sixth step, the cleaning unit is moved from the receiving position to the retracted position to release the lens at the processing position from the cleaning chamber.

In an optional seventh step, additional processing steps may be carried out.

In a first optional step, the lens can be transferred by the handling unit along the processing path and to another processing position or the inspection position.

In an optional second optional step, the related processing unit, preferably another one of the cleaning units or the inspection unit, may be moved from the related retracted position to the related receiving position to receive the lens at the other processing position in the related processing chamber.

In a third optional step, the lens is processed, preferably cleaned and/or inspected, in the related processing unit, preferably in the related processing chamber.

In an optional fourth optional step, the related processing unit is moved from the related receiving position to the related retracted position to release the lens at the other processing position from the related processing chamber.

In an optional fifth optional step, at least the first and third optional steps, and preferably all of the first to fourth optional steps, can be repeated, as desired; preferably according to the number of processing units successively arranged along the processing path.

In an eighth step, the lens is released from the handling unit, e.g. for further processing, as desired.

Hence, the advantages of the machine, as described, allow for the described efficient and effective process, thus increasing purification and cleanliness of the lens by an easy method.

According to another aspect, the present invention is directed to a standalone machine for cleaning lenses, like eyeglass lenses or any other type of optical lenses. The standalone machine comprises a handling unit - preferably like the handling unit as described herein above - for carrying and transferring a lens to be cleaned along a processing path. The standalone machine further comprises a (i.e. at least one) cleaning unit - preferably like the cleaning unit(s) as described herein above - having a cleaning chamber for cleaning the lens(es) carried by the handling unit at a cleaning position along the processing path. The standalone machine further comprises an (i.e. at least one) inspection unit - preferably like any one of the inspections units as described herein above - for inspecting the cleaned lens carried by the handling unit at an inspection position along the processing path downstream of the cleaning position. The standalone machine may be the machine as described herein above.

By integrating transportation, cleaning, and inspection functionalities into a single machine, handling and transition between different processing stages can be facilitated and the efforts to realize it be minimized. This reduces the time required for maintenance and allows for a quicker output in cleaning lenses. Combining cleaning and inspection within the same machine allows for a real-time assessment of the lens condition; preferably with minimized risk of contamination of the lens due to the close proximity of cleaning and inspection. This immediate feedback loop ensures that any residues or imperfections can be promptly identified and addressed, thus maintaining high-quality standards. Moreover, having a single standalone machine for these functions saves space, simplifies maintenance logistics and potentially reduces the need for additional equipment or resources, thus making the system more cost-effective. Moreover, integration into a single standalone machine simplifies the operational interface, making it user-friendly and easily accessible for technicians or operators. The streamlined workflow reduces the need for extensive training, and allows for easier adoption of the technology. Also, a standalone machine allows for an easy shipping and desired (re-)positioning and installation of the machine at a factory, as desired.

The cleaning unit may comprise a (i.e. at least one) washing unit - preferably like the washing unit as described herein above - to wash the lens at a washing position as the related cleaning position. Hence, effective cleaning of the lens can be obtained. The washing unit may comprise a washing chamber as the cleaning chamber.

The washing unit may comprise a cleaning element - preferably like the cleaning element as described herein above - for chemically and/or mechanically washing the lens in the cleaning or washing chamber. Hence, the machine may use effective cleaning means for easily and effectively cleaning the lens.

The cleaning element may comprise a brushing device - preferably like the brushing device as described herein above - for mechanically washing the lens in the cleaning (i.e. washing) chamber. Hence, a highly effective brushing device can be provided.

The brushing device may comprise a brush - preferably like the brush as described herein above - being arranged rotatable around a rotation axis to clean a lens surface (i.e. of the lens) positioned at a cleaning area, e.g., in the cleaning/washing chamber. Such a brush allows for a highly effective cleaning of the lens.

The rotation axis may preferably be tiltable about a tilting axis to change the orientation of the brush relative to the cleaning area. Hence, cleaning with the brush can be made even more efficient. The tilting axis may preferably be oriented orthogonally to the rotation axis, so that the relative movement of the brush can be simplified, and cleaning can be made effective even during the relative movement (i.e. tilting) of the brush during cleaning. Hence, even areas which may be difficult to be reached for the brush (e.g. areas close to contact areas of a holding unit or carrying device to carry/hold/grip/clamp the lens during cleaning) can be effectively cleaned.

The standalone machine may comprise a plurality of the cleaning units. Hence,, cleaning can be effectively improved, as needed.

The plurality of cleaning units may comprise the washing unit or a plurality of the washing units, as described herein above. Hence, said washing can be effectively improved, as needed.

Additionally or alternatively, the plurality of cleaning units may (further) comprise at least one rinsing unit to rinse the (preferably washed) lens carried by the handling unit (preferably at a rinsing position as the related cleaning position along the processing path; preferably downstream of the washing position and preferably upstream of the inspection position. Hence, the lens can be effectively removed from any residues; even from cleaning liquids of the washing process, thus increasing purification of the cleaned lens.

The rinsing unit may preferably comprise a rising element, like a liquid nozzle, to apply a liquid (e.g. a liquid jet) onto the lens. Hence, rising can be obtained in an easy and effective manner.

The plurality of cleaning units may, alternatively or additionally, preferably (further) comprise at least one drying or blowing unit to dry or blow the (e.g. washed and preferably also rinsed) lens carried by the handling unit preferably at a drying or blowing position as the related cleaning position along the processing path; preferably downstream of the washing position, preferably downstream of the rinsing position if present, and preferably upstream of the inspection position. Hence, any liquid residues and/or hard particles (like dust) can be removed, thus avoiding potential cross-contamination and increasing purification and cleanliness of the cleaned lens.

The drying or blowing unit may preferably comprise a drying or blowing element, like a (drying or blowing) nozzle, to apply a fluid (e.g. a fluid jet; preferably a gaseous fluid or air (jet)) onto the lens. Hence, a simple and effective means for drying and/or blowing the lens can be provided, thus increasing cleanliness of the cleaned lens.

The standalone machine may preferably comprise a plurality of the inspection units. Hence, most accurate inspection of the cleaned lenses can be obtained, as desired; e.g. to fulfil any desired quality standard.

The at least one or plurality of the inspection unit(s) may comprise at least one optical inspection unit for optically inspecting the lens and/or at least one cosmetic inspection unit for cosmetically inspecting the lens. Hence, inspection functionalities can be provided, as required, thus preferably allowing to obtain any desired quality standard.

According to another aspect, the present invention is directed to a method for cleaning lenses, like eyeglass lenses or any other type of optical lenses, comprising the following steps preferably in the given order:
In a first step, a standalone machine as described herein above is provided.

In a second step, a lens is received, preferably at a loading position, by the handling unit to carry the lens.

In a third step, the lens is transferred by the handling unit along the processing path and to the cleaning position.

In a fourth step, the lens is cleaned, preferably washed, at the cleaning position, preferably the washing position, in the cleaning chamber.

According to an optional fifth step, the lens is first transferred by the handling unit along the processing path to the rinsing position, and then the lens is rinsed by the rinsing unit at the rinsing position.

According to an optional sixth step, the lens is first transferred by the handling unit along the processing path to the drying or blowing position, and then the lens is dried or blown by the drying or blowing unit at the drying or blowing position.

According to a seventh step, the (cleaned; preferably washed and further preferred also rinsed and/or dried/blown) lens is transferred by the handling unit along the processing path to the inspection position.

In an eighth step, the lens is inspected by the inspection unit at the inspection position.

In a ninth step, the cleaned and inspected lens is released from the handling unit, preferably at an unloading position being downstream of the inspection position.

With the described method, the combined functionality of cleaning and inspection within the same standalone machine can be easily, effectively and efficiently obtained. All the advantages as described for the standalone machine as describe herein above are also applied to the method.

According to another aspect, the present invention is further directed to a brushing device - preferably like the brushing device as described herein above - for mechanical washing of a lens, like an eyeglass lens or any other type of optical lens. The brushing device comprises a brush being arranged rotatably around a rotation axis to clean a lens surface (i.e. of the lens) positioned at a cleaning area. The rotation axis is tiltable about a tilting axis to change the orientation of the brush relative to the cleaning area.

The brushing device of the present invention allows for easy and effective cleaning of the lens. This even more as the tilting function increases the brushing action directions relative to the cleaning area and thus relative to the lens to be cleaned. Hence, even areas which may be difficult to be reached for the brush (e.g. areas close to contact areas of a holding unit or carrying device to carry/hold/grip/clamp the lens during cleaning) can be effectively cleaned.

The tilting axis may be oriented orthogonally to the rotation axis. Hence, relative movement of the brush can be simplified, and cleaning can be made effective even during the relative movement (i.e. tilting) of the brush during cleaning.

According to another aspect, the present invention is further directed to a brushing system comprising the brushing device as just described. Moreover, the brushing system further comprises a cleaning chamber in which the brush is movably arranged to be rotatable about the rotation axis and tiltable about the tilting axis to clean a lens received in the cleaning chamber at the cleaning area.

Hence, a compact and highly effective brushing system for highly accurate cleaning can be provided.

According to another aspect, the present invention is further directed to a machine for cleaning lenses, like eyeglass lenses or any other type of optical lenses. The machine comprises the brushing system as just described. Moreover, the machine further comprises a handling unit for carrying and transferring a lens to be cleaned along a processing path to a cleaning or washing position at which the lens is cleaned by the brushing device in the cleaning chamber.

By the machine as just described, a compact, effective and efficient cleaning of a lens can be provided. The machine can be, for instance, any of the machines as described herein above.

According to another aspect, the present invention is further directed to a method for cleaning lenses, like eyeglass lenses or any other type of optical lenses. The method comprises the following steps; preferably in the given order:
In an optional first step, a machine as just described is provided.

In an optional second step, a lens is received by the handling unit to carry the lens.

In an optional third step, the lens is transferred by the handling unit along the processing path and to the cleaning or washing position.

In a fourth step, (the lens surface of) the lens is cleaned, preferably at the cleaning or washing position, by the brushing device of the present invention (e.g. in the cleaning chamber), wherein the brush is rotated about the rotation axis and selectively tilted about the tilting axis (i.e. during cleaning).

In an optional fifth step, the cleaned lens is released from the handling unit.

Before and/or after cleaning of the lens, additional processing steps may be carried out, as desired.

Hence, a method for highly accurate, effective and efficient cleaning can be provided.

Further advantages and embodiments of the present invention will be described in the following with reference to the drawings of the enclosed figures.
- Fig. 1: shows a schematic and partially cross-sectional side view of a machine according to a first embodiment of the present invention with the processing units in the retracted position,
- Fig. 2: shows a schematic and partially cross-sectional side view of the machine according to Fig. 1 with the processing units in the receiving position,
- Fig. 3: shows detail A of Fig. 1,
- Fig. 4: shows a perspective view of a carrying device of the machine according to Fig. 1,

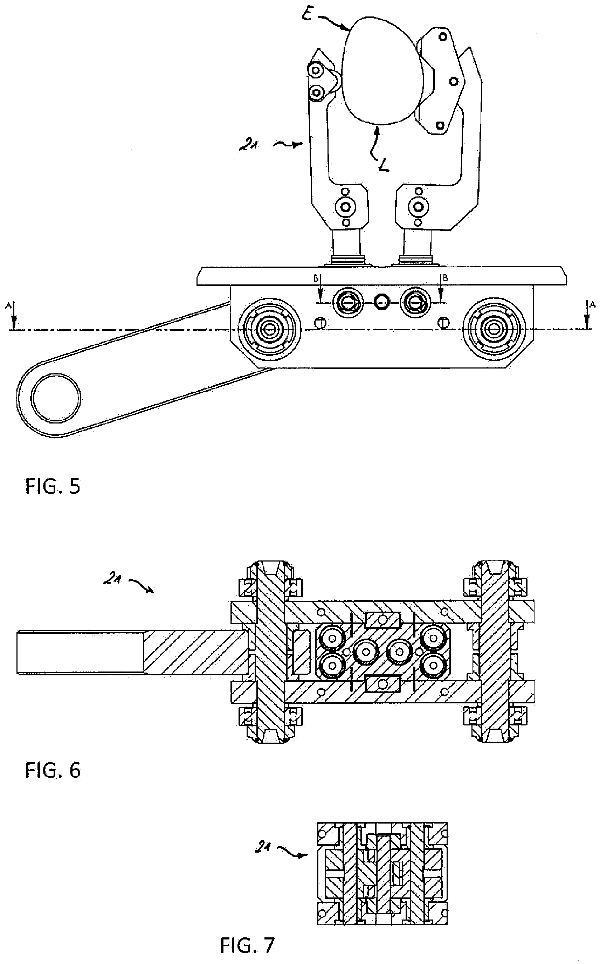

- Fig. 5: shows a side view of the carrying device of Fig. 4,
- Fig. 6: shows a cross-sectional view along line A-A of Fig. 5,
- Fig. 7: shows a cross-sectional view along line B-B of Fig. 5,

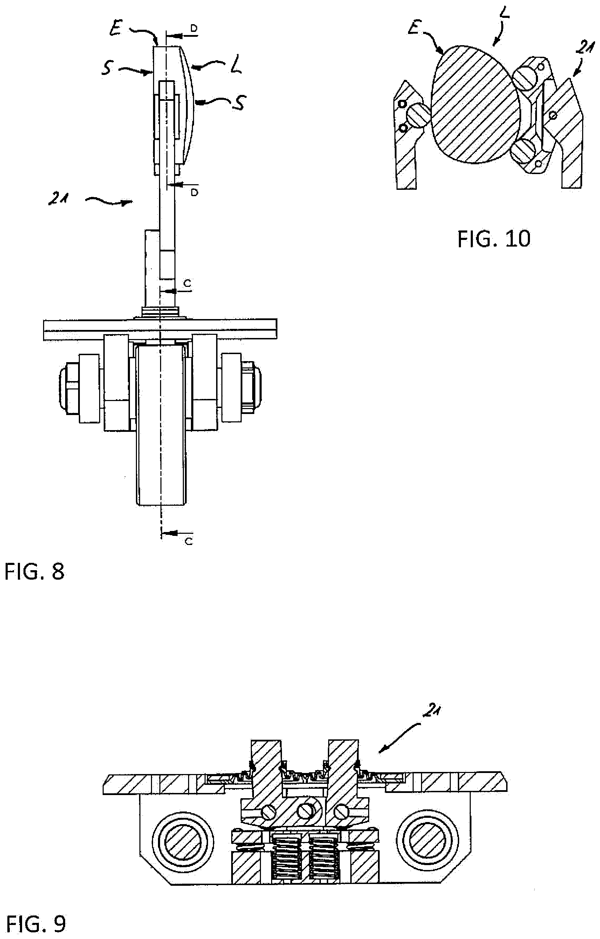

- Fig. 8: shows another side view of the carrying device of Fig. 4,
- Fig. 9: shows a cross-sectional view along line C-C of Fig. 8,
- Fig. 10: shows a cross-sectional view along line D-D of Fig. 8,
- Fig. 11: shows a perspective view of a brushing device according to an embodiment of the present invention of the machine according to Fig. 1, with two different working positions and tilting orientations of the brush shown in bold and dotted lines, respectively,
- Fig. 12: shows a side view of the brushing device of Fig. 11, and
- Fig. 13: shows another side view of the brushing device according to Fig. 11.

The figures show a machine 1 according to the present invention for cleaning lenses L, like eyeglass lenses or any other type of optical lenses, and preferable for cleaning edged lenses L, and components of said machine 1. The machine 1 can preferable be a standalone machine 1.

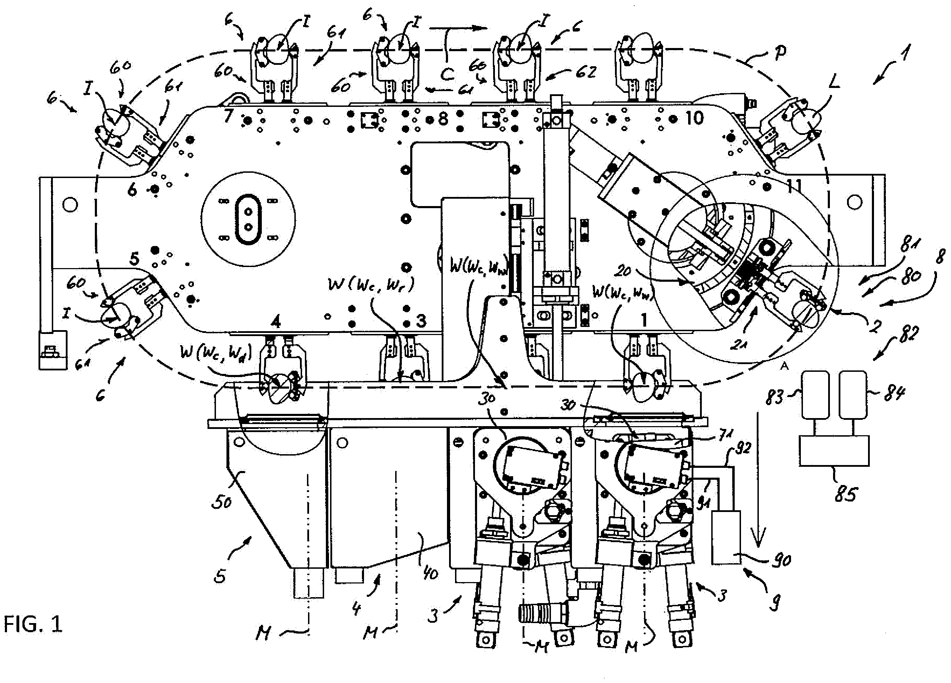

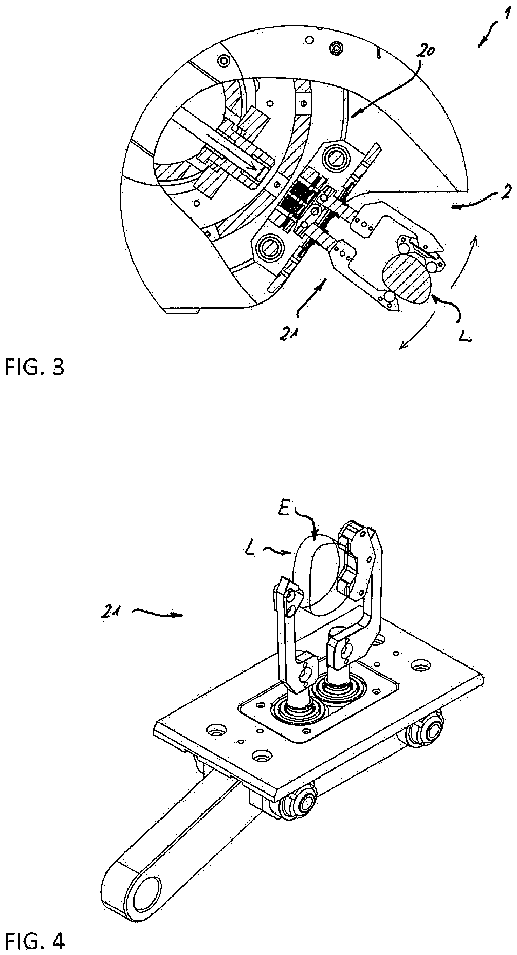

The machine 1 comprises a handling unit 2 for carrying and transferring a lens L to be cleaned along a processing path P (see Figs. 1 to 3).

The handling unit 2 may comprise a conveyor 20 adapted to move in a conveying direction C along the processing path P (see Figs. 1 to 3). The conveyor 20 may be a circular conveyor, as shown, having a closed loop processing path P.

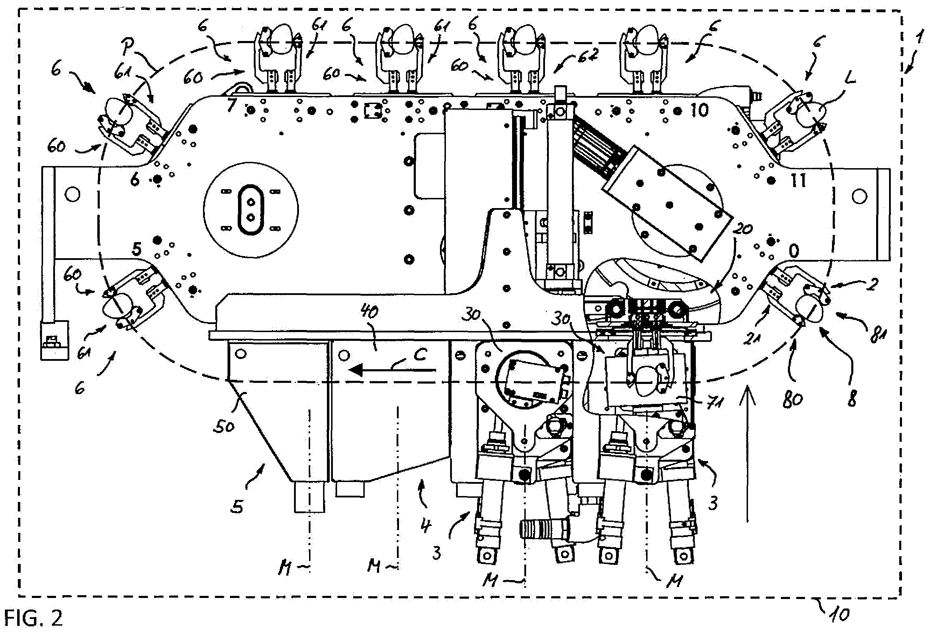

The machine 1 preferably comprises at least one processing unit 3, 4, 5 having a processing chamber 30, 40, 50 for processing the lens L carried by the handling unit 2 at a processing position W along the processing path P (see Figs. 1 and 2).

The at least one processing unit preferably comprises a cleaning unit 3 having a cleaning chamber 30 as the processing chamber for cleaning the lens L carried by the handling unit 2; e.g. at a cleaning position Wc as the processing position W.

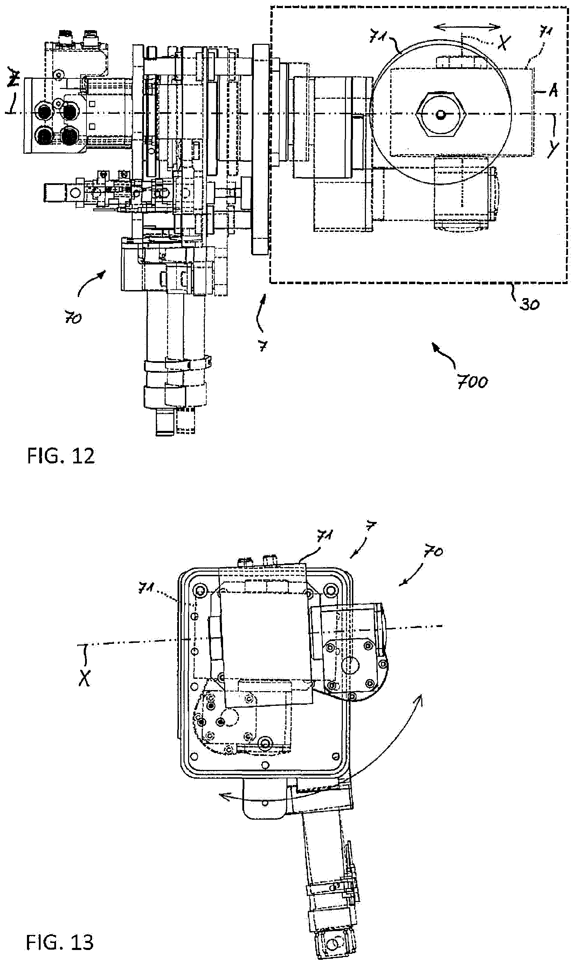

With reference to Figs. 2 and 11 to 13, the (at least one) cleaning unit 3, 4, 5 may comprise a(t least one) washing unit 3 to wash the lens L; preferably at a washing position Ww as the related processing position W or cleaning position Wc. The washing unit 3 preferably comprises a cleaning element 7 for chemical and/or mechanical washing of the lens L in the cleaning chamber 30.

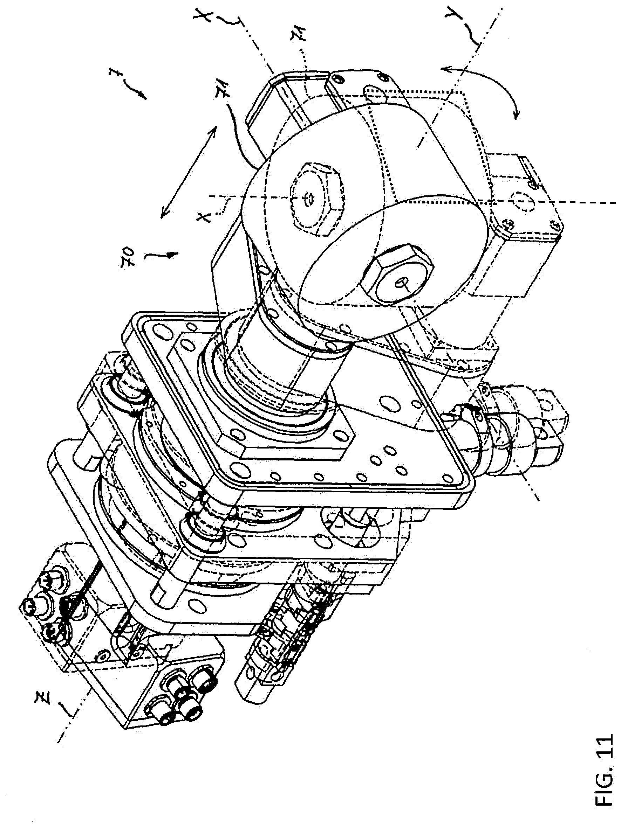

The cleaning element 7 preferable comprises a brushing device 70, as can be best seen in Figs. 11 to 13, for mechanical washing of the lens L preferably in the cleaning chamber 30. The brushing device 70 forms an individual part of the present invention. The brushing device 70 may comprise a brush 71, being arranged rotatably around a rotation axis X to clean a lens surface S of the lens L positioned at a cleaning area A; preferably in the cleaning chamber 30. The rotation axis X may preferably be tiltable about a tilting axis Y to change the orientation of the brush 71 relative to the cleaning area A. The tilting axis Y may preferably be oriented orthogonally to the rotation axis, as can be best seen in Fig. 11.

The handling unit 2 may comprise at least one carrying device 21 for gripping (e.g. clamping) the lens L, preferably at its (outer) circumferential rim E, such that the lens L is carried while being transferred along the processing path P and processed in the processing chamber 30, 40, 50. The carrying device 21 may preferably be connected to the conveyor 20 to move along the processing path P, as can be best seen in Figs. 1 to 3.

The at least one processing unit 3, 4, 5 is preferably arranged such that it can be moved along a movement path M between a retracted position (see Fig. 1) in which the lens L carried by the handling unit 2 is able to be transferred by the handling unit 2 along the complete processing path P outside and relative to the at least one processing unit 3, 4, 5, and a receiving position (see Fig. 2) in which the lens L carried by the handling unit 2 at the processing position W is received in the processing chamber 30, 40, 50 to allow the lens L be processed.

The carrying device 21, at the processing position W, may protrude, as shown preferably vertically downward, towards the related processing unit 3, 4, 5, as clearly derivable from Figs. 1 and 2.

The carrying device 21 may be arrange to be moveable (not shown), at least at the processing position W, to approach the related processing unit 3, 4, 5 to enter the lens L carried by the carrying device 21 in the related processing chamber 30, 40, 50 of the related processing unit 3, 4, 5 in the receiving position.

The receiving position (see Fig. 2) is preferably closer to the handling unit 2, more preferred to the related processing position W, than the retracted position (see Fig. 1).

The movement path M preferable is a translational movement path, which preferably extends substantially vertically, as derivable from Figs. 1 and 2.

The machine 1 may comprise a plurality of the processing units 3, 4, 5 (in Figs. 1 and 2 there are shown four of these processing units), each being movable between the related retracted position (Fig. 1) and the related receiving position (Fig. 2). The plurality of processing units 3, 4, 5, as exemplarily shown in Figs. 1 and 2, are preferably arranged in a row and more preferred side-by-side in a row.

The plurality of processing units 3, 4, 5 preferably comprises a plurality of the cleaning units 3, 4, 5. The plurality of cleaning units 3, 4, 5 preferably comprises the washing unit 3 or a plurality of the washing units 3 (e.g., in Figs. 1 and 2, there are shown two washing units 3).

Additionally or alternatively, the plurality of cleaning units 3, 4, 5 may (further) comprise at least one rinsing unit 4 to rinse the (preferably washed) lens L carried by the handling unit 2 at a rinsing position Wr as the related processing position W or cleaning position Wc along the processing path P; preferably downstream of the washing position Ww (and preferably upstream of an inspection position I, which is further defined herein below). The rinsing unit 4 may preferably comprise a rising element, like a (fluid or liquid) nozzle, to apply a fluid or liquid (e.g. a fluid or liquid jet) onto the lens L within the respective cleaning chamber 40.

Additionally or alternatively, the plurality of cleaning units 3, 4, 5 may (further) comprise at least one drying or blowing unit 5 to dry or blow the (preferably washed and further preferred also rinsed) lens L carried by the handling unit 2 at a drying or blowing position Wd as the related processing position W or cleaning position Wc along the processing path P; preferably downstream of the washing position Ww, preferably downstream of the rinsing position Wr, (and preferably upstream of the inspection position I, which is further defined herein below). The drying or blowing unit 5 may preferably comprise a drying or blowing element, like a (drying or blowing) nozzle to apply a fluid (jet) - preferably a gaseous fluid or an air jet - onto the lens L.

The plurality of the processing units 3, 4, 5 may further comprise at least one inspection unit for inspecting the cleaned lens L at an inspection position as the related processing position W. Alternatively or additionally, as shown and derivable from Figs. 1 and 2, the machine 1 may also comprise at least one or a plurality of additional processing units 6 which comprise(s) at least one inspection unit 60 for inspecting the cleaned lens L carried by the handling unit 2 at an inspection position I along the processing path P; preferably downstream of the cleaning position Wc and/or the cleaning unit(s) 3, 4, 5, as derivable from Figs. 1 and 2. Here, there are shown seven additional processing units, wherein five of which here comprise an inspection unit 6, respectively.

The (standalone) machine 1 may comprise a plurality of the inspection units 60.

The at least one or plurality of inspection unit(s) 60 may comprise at least one (here three) optical inspection unit(s) 61 for optically inspecting the lens L and/or at least one (here one) cosmetic inspection unit(s) 62 for cosmetically inspecting the lens L.

With reference to Figs. 1 and 2, there are shown, beyond the inspection units 60, additionally three additional processing units 6, which can be used, as desired, or simply left without additional functionality, according to the given needs.

The processing units 3, 4, 5 can be arranged to be moved individually from each other between their related retracted position and receiving position. It is, however, also possible, as shown in Figs. 1 and 2, that at least some or - here exemplarily shown - all of the processing units 3, 4, 5 are arranged to be jointly moved between the retracted position (Fig. 1) and the receiving position (Fig. 2).

The at least one or the plurality of the processing units 3, 4, 5 can preferably be all arranged below the handling unit 2 or below the processing path P or at least below the related processing position(s) W, as shown in Figs. 1 and 2.

The machine 1 may further comprise a loading unit 80 for loading the lens L to be cleaned to the handling unit 2, preferably to the conveyor 20 or the carrying device 21 if present. The loading unit 80 may be positioned along the processing path P upstream of the at least one processing unit 3, 4, 5. Moreover, the machine 1 may further comprise an unloading unit 81 for unloading the cleaned lens L from the handling unit 2, preferably from the conveyor 20 or the carrying device 21 if present. The unloading unit 81 preferably being positioned along the processing path P downstream of the at least one processing unit 3, 4, 5, and more preferred also downstream of the additional processing unit(s) 6, if - and here as - present.

The loading unit 80 and the unloading unit 81 may be provided in the same charging unit 8, as exemplarily shown in Figs. 1 and 2.

The loading unit 80 and/or the unloading unit 81 may respectively comprise a handling device 83 for transferring the lens L between a respective charging position and the handling unit 2, preferably the conveyor 20 or the carrying device 21 if present.

The machine 1 may further comprise a positioning unit 82 for orienting the lens L to be cleaned before being received by the handling unit 2. The positioning unit 82 may preferably comprise a or the handling device 83 adapted to orient the lens L, a scanning unit 84 to define the actual orientation of the lens L, and a control unit 85 to compare the actual orientation of the lens L with a defined processing orientation of the lens L and control the handling device 2 to transfer the lens L to the handling unit 2 so that the handling unit 2 can receive the lens L be oriented in the processing orientation.

The machine 1 may further comprise a cleaning fluid (e.g. liquid) circulation system 9 having a storage 90 to carry the cleaning fluid or liquid, a circulation path 91 to carry the cleaning fluid or liquid into the respective cleaning chamber 30, 40, 50 for cleaning the lens L, and preferably also a recirculation path 92 to recirculate the used cleaning fluid or liquid from the respective cleaning chamber 30, 40, 50. In particular, the cleaning fluid or liquid may be a detergent, (clear) water (e.g. for rinsing) and/or a gaseous fluid or air (e.g. for drying or blowing).

The machine 1 may further comprise a main frame 10, as schematically shown in Fig. 1, for carrying the handling unit 2 and the at least one processing unit 3, 4, 5 and, if present also the additional processing unit(s) 6 and all the other elements of the machine 1, as described.

In the following, a method for cleaning lenses L, like eyeglass lenses or any other type of optical lenses, is described; preferably with the following steps in the given order.

In a first step, the machine 1 according to the invention is provided.

In a second step, a lens L is received by the handling unit 2 to carry the lens L. This is exemplarily shown at station o, at which the loading unit 80 may be provided.

In a third step, the lens L is transferred by the handling unit 2 along the processing path P and to the processing position W (here exemplarily to station 1).

In a fourth step, the cleaning unit 3, 4, 5 (here preferably the first washing unit 3) is moved from the retracted position (see Fig. 1) to the receiving position (see Fig. 2) to receive the lens L at the processing position W (here being the cleaning position Wc and the washing position Ww) in the cleaning chamber 30, 40, 50 (here the first washing chamber 30).

In a fifth step, the lens L is cleaned in the cleaning chamber 30, 40, 50.

In a sixth step, the cleaning unit 3, 4, 5 is moved from the receiving position (Fig. 2) to the retracted position (Fig. 1) to release the lens L at the processing position W from the cleaning chamber 30, 40, 50.

In an optional seventh step, the lens may then proceed through more of the processing units 3, 4, 5 or additional processing unit(s) 6, as desired.

In a first optional step, the lens L may be transferred by the handling unit 2 along the processing path P and to another processing position W (here at stations 2-4) or the inspection position I (here at stations 5-9).

In an optional second optional step, the related processing unit 3, 4, 5, preferably another one of the cleaning units 3, 4, 5 or the inspection unit, may be moved from the related retracted position (see Fig. 1) to the related receiving position (see Fig. 2) to receive the lens L at the other processing position W in the related processing chamber 30, 40, 50.

In a third optional step, the lens L may be processed, preferably cleaned or inspected, in the related processing unit 3, 4, 5, 6, preferably in the related processing chamber 30, 40, 50.

In an optional fourth optional step, the related processing unit 3, 4, 5 is moved from the related receiving position (see Fig. 2) to the related retracted position (see Fig. 1) to release the lens L at the other processing position W from the related processing chamber 30, 40, 50.

In a fifth optional step, at least the first and third optional steps, and preferably all of the first to fourth optional steps, are repeated as desired, preferably according to the number of processing units 3, 4, 5, 6, including additional processing unit(s) 6, successively arranged along the processing path P.

Finally, in an eighth step, the lens L is released from the handling unit 2; preferably at the unloading unit 81 by using the handling device 83 (here at station 0).

According to the invention, a standalone machine 1 for cleaning lenses L, like eyeglass lenses or any other type of optical lenses, preferably edged lenses, is provided and an individual part of the present invention. This standalone machine 1 comprises an/the already described handling unit 2 for carrying and transferring a lens L to be cleaned along the processing path P. Moreover, the standalone machine 1 further comprises an/the already described cleaning unit 3, 4, 5 having a/the cleaning chamber 30, 40, 50 for cleaning the lens L carried by the handling unit 2 at a/the cleaning position Wc along the processing path P. The standalone machine 1 further comprises an/the already described inspection unit 60 for inspecting the cleaned lens L carried by the handling unit 2 at an/the inspection position I along the processing path P downstream of the cleaning position Wc.

The cleaning unit 3, 4, 5 may comprise an/the already described washing unit 3 to wash the lens L at a/the washing position Ww as the related cleaning position Wc The washing unit 3 may comprise a/the cleaning element 7 for chemical or mechanical washing of the lens L in the cleaning chamber (here the washing chamber) 30.

The cleaning element 7 may comprise an/the already described brushing device 70 for mechanical washing of the lens L in the cleaning chamber 30. The brushing device 70 may comprise a/the brush 71 being arranged rotatably around a/the rotation axis X to clean a/the lens surface S of the lens L positioned at a/the cleaning area A in the cleaning chamber 30, 40, 50. The rotation axis X can preferably be tiltable about a/the tilting axis Y to change the orientation of the brush 71 relative to the cleaning area A. The tilting axis Y may preferably be oriented orthogonally to the rotation axis X, as already described herein above.

The standalone machine 1 may comprise a/the plurality of the cleaning units 3, 4, 5.

The plurality of the cleaning unit 3, 4, 5 may preferably comprise the washing unit 3 or a plurality of the washing units 3.

The plurality of the cleaning units 3, 4, 5 may (additionally) comprise a/the already described at least one rinsing unit 4 for rinsing the (preferably washed) lens L carried by the handling unit 2 at a/the rinsing position Wr (i.e. as the related cleaning position Wc) along the processing path P; preferably downstream of the washing position Ww, and preferably upstream of the inspection position I.

The rinsing unit 4 may comprise a/the rinsing element 40, like a liquid nozzle, to apply a liquid (e.g. a liquid jet) onto the lens L.

The plurality of cleaning units 3, 4, 5 may (additionally) comprise a/the already described at least one drying or blowing unit 5 for drying or blowing the (preferably washed and/or preferably rinsed) lens L carried by the handling unit 2 at a/the drying or blowing position Wd as the related cleaning position Wc along the processing path P; preferably downstream of the washing position Ww, preferably downstream of the rinsing position Wr if present, and further preferred upstream of the inspection position I.

The drying or blowing unit 5 may comprise a/the already described drying or blowing element, like a (drying or blowing) nozzle, to apply a fluid (e.g. a fluid jet) - preferably a gaseous fluid or an air (jet) - onto the lens L.

The standalone machine 1 may comprise a plurality of the inspection units 60. The at least one or plurality of inspection unit(s) 60 may comprise (the) at least one optical inspection unit 61 for optically inspecting the lens L and/or (the) at least one cosmetic inspection unit 62 for cosmetically inspecting the lens L. As described, the shown standalone machine 1 exemplarily comprises four optical inspection units 61 and one cosmetic inspection unit 62. However, the invention is not limited thereto.

In the following, a method for cleaning lenses L, like eyeglass lenses or any other type of optical lenses, will be described; preferably with the following steps in the given order:
In a first step, the standalone machine 1 is provided.

In a second step, a lens L is received by the handling unit 2, preferably at a loading position (here at station 0), to carry the lens L.

In a third step, the lens L is transferred by the handling unit 2 along the processing path P and to the processing position W or cleaning position Wc.

In a fourth step, the lens L is cleaned, preferably washed, at the cleaning position Wc (here the washing position Ww) in the cleaning chamber 30, 40, 50 (here the washing chamber 30) (here at station 1 and 2).

In an optional fifth step, the lens L can then be transferred by the handling unit 2 along the processing path P to the rinsing position Wr, and then the lens L is rinsed by the rinsing unit 4 at the rinsing position Wr (here at station 3).

In an optional sixth step, the lens L can then be transferred by the handling unit 2 along the processing path P to the drying or blowing position Wd, and then the lens L is dried or blown by the drying or blowing unit 50 at the drying or blowing position Wd (here at station 4).

In a seventh step, the lens L is then transferred by the handling unit 2 along the processing path P to the inspection position I (here at station 5-9).

In an eighth step, the lens L is then inspected by the inspection unit 60 at the inspection position I.

In a ninth step, the cleaned and inspected lens L is released from the handling unit 2, preferably at an unloading position (here also at station 0) being downstream of the inspection position I.

According to the invention, a or the brushing device 70 for mechanical washing of a lens L, like an eyeglass lens, preferably an edged lens, is described as an individual part of the present invention.

The brushing device 70 comprises a/the brush 71 being arranged rotatably around a/the rotation axis X to clean a/the lens surface S of the lens L positioned at a/the cleaning area A. The rotation axis X is tiltable about a/the tilting axis Y to change the orientation of the brush 71 relative to the cleaning area A. This can be derived from Figs. 11 to 13. The tilting axis Y may be oriented orthogonally to the rotation axis X.

The brushing device 70 may be movable along a transfer axes Z to approach and distance the brush 71 with respect to the cleaning area A, to thus allow the lens L to enter the cleaning area A and/or adapt the brushing device 70 according to varying thicknesses of different lenses L to be cleaned. The transfer axes Z preferably is oriented parallel to the tilting axis Y.

A brushing system 700 may be provided which comprises the brushing device 70 as just described as well as a/the cleaning or washing chamber 30 in which the brush 71 is movably arranged to be rotatable about the rotation axis X and tiltable about the tilting axis Y to clean a lens L received in the cleaning chamber 30 at the cleaning area A.

A machine 1 for cleaning lenses L, like eyeglass lenses or any other type of optical lenses, is provided, which comprises the brushing system 700 as just described, as well as a/the already described handling unit 2 for carrying and transferring a lens L to be cleaned along a/the already described processing path P to a/the washing position Ww at which the lens L is cleaned by the brushing device 70 in the cleaning chamber 30.

In the following a method for cleaning lenses, like eyeglass lenses or any other type of optical lenses, is described; preferably with the following steps in given order:
In an optional first step, the just described machine may be provided.

In an optional second step, a lens L may be received by the handling unit 2 to carry the lens L.

In an optional third step, the lens L may be transferred by the handling unit 2 along the processing path P and to the cleaning position Wc or washing position Ww.

In a fourth step, (the lens surface S of) the lens L is cleaned at the cleaning position Wc or washing position Wc by the brushing device 70 in the cleaning or washing chamber 30, wherein the brush 71 is rotated about the rotation axis X and selectively tilted about the tilting axis Y during cleaning.

In an optional fifth step, the cleaned lens L may be released from the handling unit 2.

The present invention is not limited by the embodiments as described herein above, as long as being covered by the appended claims.

## Claims

1. A machine (1) for cleaning lenses, like eyeglass lenses, comprising:
a handling unit (2) for carrying and transferring a lens (L) to be cleaned along a processing path (P),
at least one processing unit (3, 4, 5) having a processing chamber (30, 40, 50) for processing the lens (L) carried by the handling unit (2) at a processing position (W) along the processing path (P), wherein the at least one processing unit (3, 4, 5) comprises a cleaning unit (3, 4, 5) having a cleaning chamber (30, 40, 50) as the processing chamber (30, 40, 50) for cleaning the lens (L) carried by the handling unit (2),
wherein the at least one processing unit (3, 4, 5) is arranged such that it can be moved along a movement path (M) between
• a retracted position in which the lens (L) carried by the handling unit (2) is able to be transferred by the handling unit (2) along the complete processing path (P) outside and relative to the at least one processing unit (3, 4, 5), and
• a receiving position in which the lens (L) carried by the handling unit (2) at the processing position (W) is received in the processing chamber (30, 40, 50) to allow the lens (L) be processed.

2. The machine (1) according to claim 1, wherein the handling unit (2) comprises a conveyor (20) adapted to move in a conveying direction (C) along the processing path (P),
wherein the conveyor (20) preferably is a circular conveyor (20) having a closed loop processing path (P).

3. The machine (1) according to any one of the preceding claims, wherein the handling unit (2) comprises at least one carrying device (21) for gripping the lens (L), preferably at its circumferential rim (E), such that the lens (L) is carried while being transferred along the processing path (P) and processed in the processing chamber (30, 40, 50),
wherein the carrying device (21) is preferably connected to the conveyor (20) to move along the processing path (P),
wherein preferably the carrying device (21), at the processing position (W), protrudes, preferably vertically downward, towards the related processing unit (3, 4, 5),
wherein preferably the carrying device (21) is arrange to be moveable, at least at the processing position (W), to approach the related processing unit (3, 4, 5) to enter the lens (L) carried by the carrying device (21) in the related processing chamber (30, 40, 50) of the processing unit (3, 4, 5) in the receiving position.

4. The machine (1) according to any one of the preceding claims, wherein
the movement path (M) is a translational movement path, and/or
the movement path (M) extends substantially vertically.

5. The machine (1) according to any one of the preceding claims, wherein the cleaning unit comprises a washing unit (3) to wash the lens (L),
wherein the washing unit (3) preferably comprises a cleaning element (7) for chemical and/or mechanical washing of the lens (L) in the cleaning chamber (30, 40, 50),
wherein preferably the cleaning element (7) comprises a brushing device (70) for mechanical washing of the lens (L) in the cleaning chamber (30, 40, 50), wherein preferably the brushing device (70) comprises a brush (71) being arrange rotatably around a rotation axis (X) to clean a lens surface (S) of the lens (L) positioned at a cleaning area (A) in the cleaning chamber (30, 40, 50),
wherein the rotation axis (X) is preferably tiltable about a tilting axis (Y) to change the orientation of the brush (71) relative to the cleaning area (A), the tilting axis (Y) preferably being oriented orthogonally to the rotation axis (X).

6. The machine (1) according to any one of the preceding claims, comprising a plurality of the processing units (3, 4, 5), each being moveable between the related retracted position and the related receiving position,
wherein the plurality of processing units (3, 4, 5) are preferably arranged in a row, more preferred side-by-side in a row,
wherein preferably
• the processing units (3, 4, 5) are arranged to be moved individually from each other between their related retracted position and receiving position, or
• at least some or all of the processing units (3, 4, 5) are arranged to be jointly moved between the retracted position and the receiving position.

7. The machine (1) according to the preceding claim, wherein the plurality of processing units (3, 4, 5) comprises a plurality of the cleaning units,
wherein the plurality of cleaning units preferably comprises the washing unit (3) or a plurality of the washing units (3), and preferably further comprises:
• at least one rinsing unit (4) to rinse the washed lens (L), the rinsing unit (4) preferably comprising a rinsing element like a liquid nozzle to apply a liquid jet onto the lens (L), and/or
• at least one drying unit (5) to dry the washed and preferably also rinsed lens (L), the drying unit (5) preferably comprising a drying element like a drying nozzle to apply a fluid jet - preferably a gaseous fluid or an air jet - onto the lens (L).

8. The machine (1) according to any one of the two preceding claims,
wherein the plurality of the processing units (3, 4, 5) comprises at least one inspection unit for inspecting the cleaned lens (L) at an inspection position as the related processing position (W), and/or
wherein at least one or a plurality of additional processing units (6) comprises at least one inspection unit (60) for inspecting the cleaned lens (L) at an inspection position (I) along the processing path (P) preferably downstream of the cleaning unit(s) (3, 4, 5),
wherein the at least one inspection unit (60) preferably comprises at least one optical inspection unit (61) for optically inspecting the lens (L) and/or at least one cosmetic inspection unit (62) for cosmetically inspecting the lens (L).

9. The machine (1) according to any one of the preceding claims,
wherein the at least one or the plurality of processing units (3, 4, 5) are all arranged below the handling unit (2) or below the processing path (P) or at least below the related processing position(s) (W), and/or
wherein the receiving position is closer to the handling unit (2), preferably the related processing position (W), than the retracted position.

10. The machine (1) according to any one of the preceding claims, further comprising a loading unit (80) for loading the lens (L) to be cleaned to the handling unit (2), preferably the conveyor (20) or the carrying device (21), if present, the loading unit (80) being positioned along the processing path (P) upstream of the at least one processing unit (3, 4, 5), and/or
an unloading unit (81) for unloading the cleaned lens (L) from the handling unit (2), preferably the conveyor (20) or the carrying device (21), if present, the unloading unit (81) being positioned along the processing path (P) downstream of the at least one processing unit (3, 4, 5), and preferably also downstream of the additional processing unit(s) (6) if present,
wherein preferably
• the loading unit (80) and the unloading unit (81) are provided in the same charging unit (8),
• the loading unit (80) and/or the unloading unit (81) respectively comprise a handling device (83) for transferring the lens (L) between a respective charging position and the handling unit (2), preferably the conveyor (20) or the carrying device (21), if present.

11. The machine (1) according to any one of the preceding claims, further comprising a positioning unit (82) for orienting the lens (L) to be cleaned before being received by the handling unit (2),
wherein the positioning unit (82) preferably comprises a or the handling device (83) adapted to orient the lens (L), a scanning unit (84) to define the actual orientation of the lens (L), and a control unit (84) to compare the actual orientation of the lens (L) with a defined processing orientation of the lens (L) and control the handling device (83) to transfer the lens (L) to the handling unit (2) so that the handling unit (2) can receive the lens (L) be oriented in the processing orientation,
and/or
the machine (1) further comprising a cleaning liquid circulation system (9) having a storage (90) to carry the cleaning liquid, a circulation path (91) to carry the cleaning liquid into the respective cleaning chamber (30, 40, 50) for cleaning the lens (L), and preferably also a recirculation path (92) to recirculate the used cleaning liquid from the respective cleaning chamber (30, 40, 50).

12. The machine (1) according to any one of the preceding claims, further comprising a main frame (10) carrying the handling unit (2) and the at least one processing unit (3, 4, 5), and/or
wherein the machine (1) is a standalone machine.

13. A Method for cleaning lenses (L), like eyeglass lenses, comprising the following steps in the given order:
a) providing a machine (1) according to any one of the preceding claims,
b) receiving a lens (L) by the handling unit (2) to carry the lens (L),
c) transferring the lens (L) by the handling unit (2) along the processing path (P) and to the processing position (W),
d) moving the cleaning unit from the retracted position to the receiving position to receive the lens (L) at the processing position (W) in the cleaning chamber (30, 40, 50),
e) cleaning the lens (L) in the cleaning chamber (30, 40, 50),
f) moving the cleaning unit from the receiving position to the retracted position to release the lens (L) at the processing position (W) from the cleaning chamber (30,40,50),
g) optionally
g1) transferring the lens (L) by the handling unit (2) along the processing path (P) and to another processing position (W) or the inspection position (I),
g2) optionally moving the related processing unit (3, 4, 5), preferably another one of the cleaning units (30, 40, 50) or the inspection unit, from the related retracted position to the related receiving position to receive the lens (L) at the other processing position (W) in the related processing chamber (30, 40, 50),
g3) processing, preferably cleaning or inspecting, the lens (L) in the related processing unit (3, 4, 5, 6), preferably in the related processing chamber (30,40,50),
g4) optionally moving the related processing unit (3, 4, 5) from the related receiving position to the related retracted position to release the lens (L) at the other processing position (W) from the related processing chamber (30, 40, 50),
g5) optionally repeating at least steps g1) and g3), preferably steps g1) to g4), preferably according to the number of processing units (3, 4, 5, 6) successively arranged along the processing path (P),
h) releasing the lens (L) from the handling unit (2).

14. A standalone machine (1) for cleaning lenses (L), like eyeglass lenses, comprising:
a handling unit (2) for carrying and transferring a lens (L) to be cleaned along a processing path (P),
a cleaning unit having a cleaning chamber (30, 40, 50) for cleaning the lens (L) carried by the handling unit (2) at a cleaning position (Wc) along the processing path (P), and an inspection unit (60) for inspecting the cleaned lens (L) carried by the handling unit (2) at an inspection position (I) along the processing path (P) downstream of the cleaning position (Wc).

15. A brushing device (70) for mechanical washing of a lens (L), like an eyeglass lens, comprising a brush (71) being arrange rotatably around a rotation axis (X) to clean a lens surface (S) of the lens (L) positioned at a cleaning area (A), wherein the rotation axis (X) is tiltable about a tilting axis (Y) to change the orientation of the brush (71) relative to the cleaning area (A).
